# EUROPEAN PATENT APPLICATION

(11) **EP 4 468 430 A1**
(43) Date of publication of application: **27.11.2024**
(21) Application number: 23912869.7
(22) Date of filing: 26.12.2023
(51) Int. Cl.: H01M 10/04, H01M 50/538

(54) **ELECTRODE ASSEMBLY, AND SECONDARY BATTERY, BATTERY PACK, AND TRANSPORTATION MEANS COMPRISING ELECTRODE ASSEMBLY**

(30) Priority: 26.12.2022 KR 20220184812
(71) Applicant: LG Energy Solution, Ltd., Seoul 07335 (KR)
(72) Inventor: LEE, Byeongjoon, Daejeon 34122 (KR); KOO, Seongmo, Daejeon 34122 (KR)
(74) Representative: Goddar, Heinz J.
(86) International application number: PCT/KR2023/021566
(87) International publication number: WO 2024/144194

(57) **Abstract**

The present specification relates to an electrode assembly, in which a positive electrode, a negative electrode, and a separator provided between the positive electrode and the negative electrode are stacked and wound, a secondary battery including the same, a battery pack, and a transportation means.

## Description

### [Technical Field]

This application claims priority to and the benefit of Korean Patent Application No. 10-2022-0184812 filed with the Korean Intellectual Property Office on December 26, 2022, the entire contents of which are incorporated herein by reference.

The present specification relates to an electrode assembly, in which a positive electrode, a negative electrode, and a separator provided between the positive electrode and the negative electrode are stacked and wound, a secondary battery including the same, a battery pack, and a transportation means.

### [Background Art]

In the case of a cylindrical battery, a jelly-roll type electrode assembly is manufactured by winding a long electrode, which is a predetermined width, in the form of a roll. The electrodes of the cylindrical battery, which is manufactured by inserting the jelly-roll type electrode assembly into a battery casing, are repeatedly contracted and expanded during a charging or discharging process. In particular, in case that tabs are positioned in a core of the jelly-roll type electrode assembly or a silicon-based active material is added into the negative electrode and a degree to which the electrode assembly is contracted or expanded is increased, a pressure applied to a mandrel of the electrode assembly is greatly increased.

Recently, with the increase in use of low-resistance/high-capacity designs, there has been an increasing number of cases in which the jelly-roll type electrode assembly includes the plurality of tabs or the silicon-based active material is added. Therefore, there is an increasing likelihood that the electrode assembly positioned at the mandrel side is deformed by the contraction or expansion of the electrode assembly. In particular, in case that a separator positioned between a negative electrode and a positive electrode is damaged, the negative electrode and the positive electrode come into direct contact with each other, which causes an internal short circuit that leads to a problem of heat generation and ignition.

In order to prevent the problem of the occurrence of damage to the separator and the internal short circuit caused by the deformation of the electrode assembly, there is a need to develop a technology capable of protecting the positive electrode and the separator in the corresponding region and suppressing the occurrence of the internal short circuit.

### [Detailed Description of the Invention]

### [Technical Problem]

The present specification has been made in an effort to provide an electrode assembly, in which a positive electrode, a negative electrode, and a separator provided between the positive electrode and the negative electrode are stacked and wound, a secondary battery including the same, a battery pack, and a transportation means.

### [Technical Solution]

An embodiment of the present specification provides an electrode assembly in which a positive electrode, a negative electrode, and separators provided between the positive electrode and the negative electrode are stacked and wound, in which the negative electrode includes a negative electrode current collector and a negative electrode active material layer provided on at least one surface of the negative electrode current collector, in which the negative electrode includes a negative electrode non-coated portion provided at one end of a mandrel part side of the negative electrode current collector and having no negative electrode active material layer, in which a negative electrode tab is provided on the negative electrode non-coated portion, in which the separator and the negative electrode extend toward a mandrel part side of the electrode assembly so as to be further elongated than a longitudinal end of the positive electrode and are additionally wound, and in which on an arbitrary circle in which a mandrel of the electrode assembly is a center of the circle and a distance from the center of the circle to the longitudinal end of the positive electrode is a radius, a central angle of a minor arc formed to the longitudinal end of the positive electrode from a contact point at which a line extending from a winding start portion of the negative electrode tab to an arbitrary point on a circumference of the arbitrary circle is orthogonal to a tangent line to the arbitrary circle is 90° or less. Specifically, the central angle of the minor arc formed from the contact point to the longitudinal end of the positive electrode may be 90° or less, 85° or less, 80° or less, 75° or less, 70° or less, 65° or less, 60° or less, 55° or less, 50° or less, 45° or less, 40° or less, 35° or less, 30° or less, 25° or less, 20° or less, 15° or less, 10° or less, or 5° or less and 0° or more, more than 0°, 1° or more, 2° or more, 3° or more, or 4° or more.

In another embodiment of the present specification, the positive electrode may include the positive electrode current collector and the positive electrode active material layers provided on at least one surface of the positive electrode current collector, the positive electrode may include a positive electrode non-coated portion having no positive electrode active material layer, and a positive electrode tab may be provided on the positive electrode non-coated portion. In this case, on the arbitrary circle, a central angle of an arc formed to the longitudinal end of the positive electrode from the contact point at which the line, which extends from the winding start portion of the positive electrode tab to the arbitrary point on the circumference of the arbitrary circle, is orthogonal to the tangent line to the arbitrary circle, may be more than 90° and 180° or less.

In another embodiment of the present specification, the positive electrode non-coated portion may be positioned between two positive electrode coated portions having the positive electrode active material layers.

In another embodiment of the present specification, the negative electrode may further include an additional negative electrode non-coated portion provided at one end of the outer peripheral side of the negative electrode current collector and having no negative electrode active material layer, and an additional negative electrode tab may be provided on the additional negative electrode non-coated portion.

In another embodiment of the present specification, the positive electrode may include a positive electrode current collector and positive electrode active material layers provided on two opposite surfaces of the positive electrode current collector, and winding start portions of the positive electrode active material layers provided on the two opposite surfaces of the positive electrode current collector are identical to or different from each other, particularly identical to each other.

In another embodiment of the present specification, the positive electrode may include positive electrode active material layers provided on two opposite surfaces of the positive electrode current collector, and winding end portions of the positive electrode active material layers provided on the two opposite surfaces of the positive electrode current collector may be identical to or different from each other, and particularly identical to each other.

In another embodiment of the present specification, a length of the negative electrode tab may be 2 mm or more and 5 mm or less in the winding direction.

In another embodiment of the present specification, the separators may include a first separator and a second separator, and the electrode assembly may be made by sequentially stacking and winding the negative electrode, the first separator, the positive electrode, and the second separator.

In another embodiment of the present specification, the electrode assembly may be wound so that the negative electrode is disposed on an outermost periphery.

Yet another embodiment of the present specification provides a secondary battery including the electrode assembly and a battery case configured to accommodate the electrode assembly. In addition, a cross-section of the electrode assembly perpendicular to the mandrel axis may be a circle, and the battery case may have a cylindrical shape.

Another embodiment of the present specification provides a battery pack including two or more secondary batteries.

Still another embodiment of the present specification provides a transportation means including the battery pack. The transportation means may mean any means that works while moving or moving goods, people, and the like. The transportation means may be a bicycle, heavy equipment, agricultural equipment, vehicle, bus, airplane, or the like.

### [Advantageous Effects]

According to the electrode assembly according to the embodiment of the present specification, the negative electrode tab is disposed rearward of the winding start portion of the positive electrode in the winding direction of the positive electrode, which may suppress a slip of the end of the positive electrode during the process of charging or discharging the battery.

The electrode assembly according to another embodiment of the present specification may be provided to prevent damage to the separator caused by the deformation of the electrode assembly caused by the contraction/expansion of the electrode during the process of charging or discharging the battery and prevent an internal short circuit between the electrodes, which may improve the stability and lifespan properties of the battery.

According to the electrode assembly according to still another embodiment of the present specification, the negative electrode tab is disposed rearward of the winding start portion of the positive electrode in the winding direction of the positive electrode, which may properly maintain the shape of the mandrel part during the process of charging or discharging the battery.

### [Brief Description of Drawings]

FIG. 1 is a perspective view of a wound electrode stack.
FIG. 2 is a view illustrating a process of winding the electrode stack.
FIG. 3 is a top plan view illustrating the wound electrode stack and illustrating an arbitrary circle having a radius that is a distance from a center of the circle to a longitudinal end of the positive electrode based on the top plan view.
FIG. 4 is a vertical cross-sectional view of a secondary battery accommodated in a battery casing in which the wound electrode stack is accommodated.
FIG. 5 is a view schematically illustrating a configuration of a battery pack according to an embodiment of the present invention.
FIG. 6 is a view for explaining a vehicle including the battery pack in FIG. 5.
FIG. 7 is a view illustrating the determination of a position of a positive electrode winding start portion in the embodiment.
FIG. 8 is a view illustrating CT images made before and after operations of batteries according to an example and a comparative example.
FIG. 9 is a view illustrating a method of identifying, from the CT images, a degree of deformation of a mandrel side negative electrode after the operation of the battery.

### [Explanation of Reference Numerals and Symbols]

1: Electrode assembly
10: Mandrel
1b: Outermost periphery
1c: Interior
110: Negative electrode
111: Negative electrode current collector
112: First negative electrode active material layer
113: Second negative electrode active material layer
114: Negative electrode non-coated portion
116: Negative electrode tab
120: Positive electrode
121: Positive electrode current collector
122: First positive electrode active material layer
123: Second positive electrode active material layer
131: First separator
132: Second separator
20: Secondary battery
21: Can
22: Cap assembly
200: Battery pack
201: Cylindrical battery cell
202: Pack housing
V: Vehicle

### [Best Mode]

Hereinafter, the present invention will be described in detail with reference to the drawings. However, the drawings are intended to illustratively describe the present invention, and the scope of the present invention is not limited by the drawings.

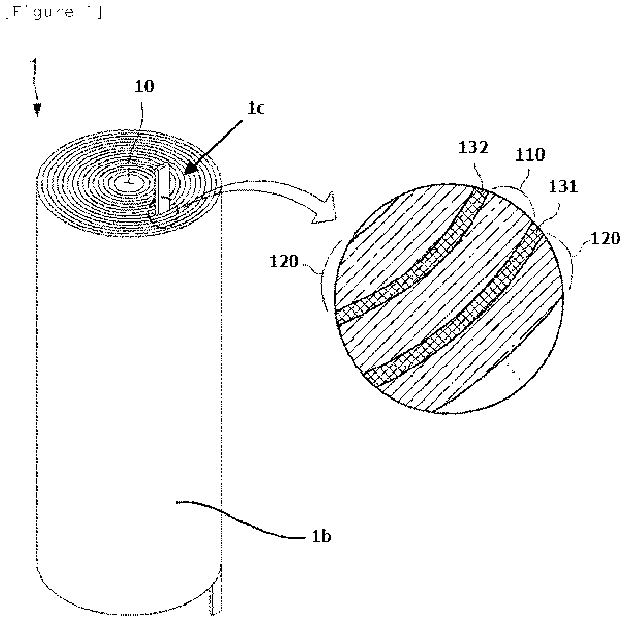

FIG. 1 is a perspective view of a wound electrode stack. First, a positive electrode 120, a negative electrode 110, and separators 131 and 132 provided between the positive electrode 120 and the negative electrode 110 may be stacked. The separators may be provided as two separators. As illustrated in FIG. 1, a first separator 131 may be provided between the negative electrode 110 and the positive electrode 120, and a second separator 132 may be additionally provided on a surface opposite to the surface of the positive electrode 120 that adjoins the first separator 131. Specifically, the second separator 132, the positive electrode 120, the first separator 131, and the negative electrode 110 may be sequentially stacked.

The second separator 132, the positive electrode 120, the first separator 131, and the negative electrode 110 may be sequentially stacked and wound toward the negative electrode 110 in the winding direction. In case that the winding process is performed as described above, the separator of the wound electrode assembly may be exposed to an outermost periphery 1b.

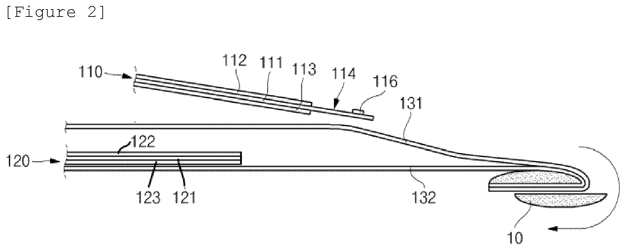

As necessary, as illustrated in FIG. 2, the winding process is performed toward the positive electrode 120 in the direction opposite to the winding direction. In case that the winding process is performed as described above, the negative electrode 110 or the negative electrode 110 and the separators 131 and 132 of the wound electrode assembly may be exposed to the outermost periphery 1b. In this case, in case that the negative electrode is exposed to the outermost periphery 1b, only a negative electrode non-coated portion at an outer peripheral side, on which no negative electrode active material layer is provided, may be exposed, or a negative electrode coated portion at the outer peripheral side, together with the negative electrode non-coated portion at the outer peripheral side, may also be exposed to the outermost periphery 1b.

An interior 1c of an wound electrode assembly 1 as illustrated in FIG. 1 refers to a portion of the wound electrode assembly that excludes the outermost periphery 1b. In this case, when it is assumed that the wound electrode assembly is a column, the outermost periphery 1b means a lateral surface exposed to the outside, and the interior 1c includes an entire inner region of the column that excludes the lateral surface.

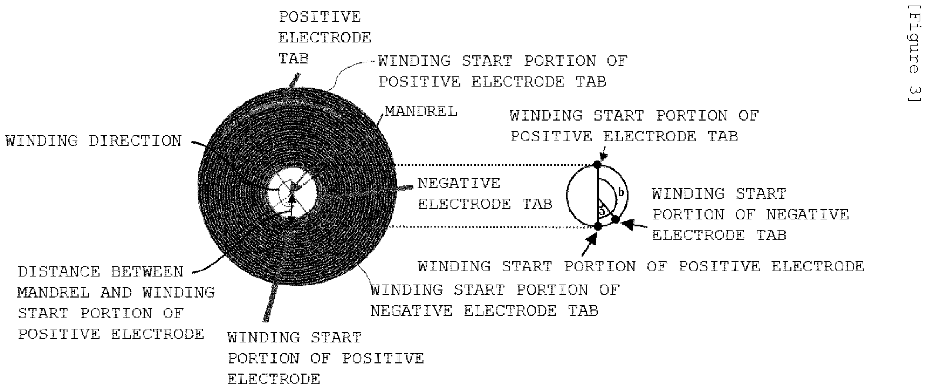

A winding roll having the top plan view illustrated in FIG. 3 may be manufactured by winding the electrode assembly 1 stacked as illustrated in FIG. 2.

The positive electrode 120 and the negative electrode 110 may each include a current collector, and an active material layer provided on at least one surface of the current collector.

The positive electrode 120 may include a positive electrode current collector 121 and positive electrode active material layers 122 and 123 provided on at least one surface of the positive electrode current collector 121. The positive electrode active material layers 122 and 123 may be provided on two opposite surfaces of the positive electrode current collector 121 and include a first positive electrode active material layer 122 provided on one surface of the positive electrode current collector 121, and a second positive electrode active material layer 123 provided on a surface opposite to one surface on which the first positive electrode active material layer 122 is provided.

The positive electrode 120 includes one or more positive electrode tabs, and the positive electrode tab is positioned on a positive electrode non-coated portion on which the positive electrode active material layers 122 and 123 are not provided.

In the embodiment, the positive electrode 120 may include a positive electrode coated portion on which a positive electrode active material layer is provided on the positive electrode current collector 121, and a positive electrode non-coated portion provided at a distal end of one side or two opposite sides of the positive electrode current collector 121 and having no positive electrode active material layer. In this case, the positive electrode tab may be positioned on the positive electrode non-coated portion positioned at the distal end of one side or two opposite sides of the positive electrode current collector 121, particularly positioned on the positive electrode non-coated portion at the distal end of one side.

In another embodiment, the positive electrode 120 may include a positive electrode non-coated portion provided at an outer peripheral side end of the positive electrode current collector 121 and having no positive electrode active material layer, and the positive electrode tab may be formed on the positive electrode non-coated portion.

In another embodiment, the positive electrode 120 may include two or more positive electrode coated portions provided on the positive electrode current collector 121, having positive electrode active material layers, and spaced apart from one another in a longitudinal direction, and a positive electrode non-coated portion provided between the two or more positive electrode coated portions and having no positive electrode active material layer. In this case, the positive electrode tab may be positioned on the positive electrode non-coated portion between the two or more positive electrode coated portions, particularly positioned on the positive electrode non-coated portion positioned between the two positive electrode coated portions. In this case, the distal ends of the two opposite sides of the positive electrode 120 may be formed as free edges having no positive electrode non-coated portion.

The positive electrode 120 may include the positive electrode current collector 121 and the positive electrode active material layers 122 and 123 provided on two opposite surfaces of the positive electrode current collector 121. The first positive electrode active material layer 122 provided on one surface of the positive electrode current collector 121 may be identical or different in length to or from the second positive electrode active material layer 123 provided on the other surface.

In another embodiment of the present specification, the positive electrode 120 may include the positive electrode current collector 121 and the positive electrode active material layers 122 and 123 provided on the two opposite surfaces of the positive electrode current collector 121, and winding start portions of the positive electrode active material layers 122 and 123 provided on the two opposite surfaces of the positive electrode current collector 121 may be identical to each other.

In another embodiment of the present specification, the positive electrode 120 may include the positive electrode active material layers 122 and 123 provided on the two opposite surfaces of the positive electrode current collector 121, and winding end portions of the positive electrode active material layers 122 and 123 provided on the two opposite surfaces of the positive electrode current collector 121 may be identical to each other.

The negative electrode 110 may include a negative electrode current collector 111 and negative electrode active material layers 112 and 113 provided on at least one surface of the negative electrode current collector 111. The negative electrode active material layers 112 and 113 may be provided on two opposite surfaces of the negative electrode current collector 111 and include a first negative electrode active material layer 112 provided on one surface of the negative electrode current collector 111, and a second negative electrode active material layer 113 provided on a surface opposite to one surface on which the first negative electrode active material layer 112 is provided.

The negative electrode 110 includes one or more negative electrode tabs 116, and the negative electrode tabs 116 are positioned on the negative electrode non-coated portions on which the negative electrode active material layers 112 and 113 are not provided.

In the embodiment, the negative electrode 110 may include a negative electrode coated portion on which a negative electrode active material layer is provided on the negative electrode current collector 111, and a negative electrode non-coated portion provided at a distal end of one side or two opposite sides of the negative electrode current collector 111 and having no negative electrode active material layer. In this case, the negative electrode tab 116 may be positioned on the negative electrode non-coated portion positioned at the distal end of one side or two opposite sides of the negative electrode current collector 111, particularly positioned on the negative electrode non-coated portion at the distal end of the two opposite sides.

In another embodiment, the negative electrode 110 may include a negative electrode non-coated portion positioned at an end of the mandrel part side of the negative electrode current collector 111 and having no active material layer, and the negative electrode tab 116 may be formed on the negative electrode non-coated portion.

The negative electrode 110 may include the negative electrode current collector 111 and the negative electrode active material layers 112 and 113 provided on two opposite surfaces of the negative electrode current collector 111. The first negative electrode active material layer 112 provided on one surface of the negative electrode current collector 111 may be identical or different in length to or from the second negative electrode active material layer 113 provided on the other surface.

In still another embodiment, the positive electrode 120 may include: two positive electrode coated portions spaced apart from each other in the winding direction of the electrode assembly 1 and having the positive electrode active material layers 122 and 123 on the positive electrode current collector 121; and a positive electrode non-coated portion provided between the two coated portion and having no positive electrode active material layer on the positive electrode current collector 121. One positive electrode tab may be formed on the positive electrode non-coated portion, and the negative electrode 110 may include two negative electrode non-coated portions provided at two opposite ends of the negative electrode current collector 111 and having no negative electrode active material layer. The negative electrode tabs 116 may be formed on the two negative electrode non-coated portions, one negative electrode tab for each negative electrode non-coated portion.

The embodiment of the present specification provides the electrode assembly 1 in which the positive electrode 120, the negative electrode 110, and the separators 131 and 132 provided between the positive electrode 120 and the negative electrode 110 are stacked and wound, the negative electrode 110 includes the negative electrode current collector 111 and the negative electrode active material layers 112 and 113 provided on at least one surface of the negative electrode current collector 111, the negative electrode 110 includes the negative electrode non-coated portion provided at one end of the mandrel part side of the negative electrode current collector 111 and having no negative electrode active material layer, the negative electrode tab 116 is provided on the negative electrode non-coated portion, and the separators 131 and 132 and the negative electrode 110 extend from the mandrel part side of the electrode assembly 1 so as to be further elongated than a longitudinal end of the mandrel part side of the positive electrode 120 and are additionally wound. In an arbitrary circle in which the mandrel of the electrode assembly 1 is a center of a circle, and a distance from the center of the circle to the longitudinal end of the mandrel part side of the positive electrode 120, i.e., a winding start portion of the positive electrode 120 is a radius. A central angle a of a minor arc formed to the longitudinal end of the positive electrode 120 from a contact point at which a line, which extends from the winding start portion of the negative electrode tab 116 to an arbitrary point on a circumference of the arbitrary circle, is orthogonal to a tangent line to the arbitrary circle, is 90° or less. Specifically, the central angle of the minor arc formed from the contact point to the longitudinal end of the positive electrode may be 90° or less, 85° or less, 80° or less, 75° or less, 70° or less, 65° or less, 60° or less, 55° or less, 50° or less, 45° or less, 40° or less, 35° or less, 30° or less, 25° or less, 20° or less, 15° or less, 10° or less, or 5° or less and 0° or more, more than 0°, 1° or more, 2° or more, 3° or more, or 4° or more. In this case, the winding start portion of the positive electrode 120 may be a winding start portion of the positive electrode coated portion having the positive electrode active material layers 122 and 123.

In the present specification, the winding start portion may be expressed as a winding start point that is a single point.

In another embodiment of the present specification, the positive electrode 120 may include the positive electrode current collector 121 and the positive electrode active material layers 122 and 123 provided on at least one surface of the positive electrode current collector 121, the positive electrode 120 may include a positive electrode non-coated portion having no positive electrode active material layer, and a positive electrode tab (not illustrated) may be provided on the positive electrode non-coated portion. In this case, on the arbitrary circle, a central angle b of an arc formed to the longitudinal end of the positive electrode 120 from the contact point at which the line, which extends from the winding start portion of the positive electrode tab (not illustrated) to the arbitrary point on the circumference of the arbitrary circle, is orthogonal to the tangent line to the arbitrary circle, may be more than 90° and 180° or less.

In the present specification, a mandrel 10 illustrated in FIG. 2 is a winding device, and the mandrel 10 is removed after the winding process is completed as illustrated in FIG. 3. In FIG. 3, the mandrel 10 may be a space, which is maintained after the winding device is removed, or the mandrel 10 may be a winding reference line. Alternatively, when a perpendicular cross-section of the wound electrode assembly 1, which is taken in a direction perpendicular to an axis of the wound electrode assembly 1, defines a circle, the mandrel 10 may be a center point of the circle. The term "mandrel part side" means a region close to the mandrel or a direction toward the mandrel.

Still another embodiment of the present specification provides the electrode assembly 1 in which the positive electrode 120, the negative electrode 110, and the separators 131 and 132 provided between the positive electrode 120 and the negative electrode 110 are stacked and wound, the negative electrode 110 includes the negative electrode current collector 111 and the negative electrode active material layers 112 and 113 provided on at least one surface of the negative electrode current collector 111, and the negative electrode 110 includes the negative electrode tab 116 provided at one end of the mandrel part side of the negative electrode current collector 111. The separators 131 and 132 and the negative electrode 110 extend from the mandrel part side of the electrode assembly 1 so as to be further elongated than the longitudinal end of the positive electrode 120 and are additionally wound. On at least one cross-section in the direction perpendicular to the mandrel of the electrode assembly 1, an angle θ1 defined between a straight line L_{ce} extending from the mandrel to the longitudinal end of the mandrel part side of the positive electrode 120 and a straight line Lₐₜ extending from the mandrel to the winding start portion of the negative electrode tab 116 may be 90° or less. In this case, the angle θ1 is an angle from the straight line L_{ce} to the straight line Lₐₜ in a counterclockwise direction, an angle from the straight line Lₐₜ to the straight line L_{ce} in a clockwise direction, or an angle from the straight line L_{ce} to the straight line Lₐₜ in the winding direction.

In other words, in FIG. 3, the angle θ1 is the central angle a of the minor arc formed to the longitudinal end of the mandrel part side of the positive electrode from the contact point at which the line extending from the winding start portion of the negative electrode tab 116 to the arbitrary point on the circumference of the arbitrary circle is orthogonal to the tangent line to the arbitrary circle. On the arbitrary circle, based on the longitudinal end of the mandrel part side of the positive electrode, the contact point of the winding start portion of the negative electrode tab 116 is present within a range of 90° or less in the winding direction.

Because the negative electrode 110 further extends than the positive electrode 120 and is wound around the mandrel, the negative electrode tab 116 at the mandrel side is wound first before the winding start portion of the positive electrode is wound, and then the positive electrode 120 is wound. As illustrated in FIG. 3, on the arbitrary circle, based on the longitudinal end of the mandrel part side of the positive electrode 120, the contact point of the winding start portion of the negative electrode tab 116 is present within the range of 90° or less in the winding direction, such that the negative electrode tab 116 is disposed rearward of the winding start portion of the positive electrode 120 in the winding direction of the positive electrode 120. In this case, the negative electrode tab 116, which is relatively rigid and wound before the positive electrode 120 is wound, presses an end of the mandrel part side of the positive electrode 120 by using a centrifugal force, which may prevent a movement, i.e., a slip of the end of the mandrel part side of the positive electrode 120.

In another embodiment of the present specification, a length of the negative electrode tab 116 may be 2 mm or more and 5 mm or less in the winding direction. In this case, the rigidity is imparted to suppress the motion of the mandrel part side of the positive electrode 120 by pressing the end of the mandrel part side of the positive electrode 120.

In another embodiment of the present specification, the negative electrode 110 may further include an additional negative electrode non-coated portion provided at one end of the outer peripheral side of the negative electrode current collector 111 and having no negative electrode active material layer, and an additional negative electrode tab may be provided on the additional negative electrode non-coated portion.

In another embodiment of the present specification, an angle θ2 defined between a straight line L_{ce} extending from the mandrel to the longitudinal end of the mandrel part side of the positive electrode 120 and a straight line Lₐₑ extending from the mandrel to the winding start portion of the positive electrode tab (not illustrated) may be more than 90° and 180° or less. In this case, the angle θ2 is an angle from the straight line L_{ce} to the straight line Lₐₑ in the counterclockwise direction, an angle from the straight line Lₐₑ to the straight line L_{ce} in the clockwise direction, or an angle from the straight line L_{ce} to the straight line Lₐₑ in the winding direction. In addition, the angle θ2 may be the central angle b of the minor arc formed to the longitudinal end of the mandrel part side of the positive electrode 120 from the contact point at which the line extending from the winding start portion of the positive electrode tab (not illustrated) to the arbitrary point on the circumference of the arbitrary circle is orthogonal to the tangent line to the arbitrary circle.

As illustrated in FIG. 3, when the positions in the arbitrary circle are expressed by using positions on a clock, the longitudinal end (winding start portion) of the mandrel part side of the positive electrode 120 may be expressed as a 6 o'clock position, the winding start portion of the negative electrode tab 116 may be expressed as a 4 o'clock position, and the winding start portion of the positive electrode tab (not illustrated) may be expressed as a 12 o'clock position.

Yet another embodiment of the present specification provides a secondary battery including the electrode assembly and a battery case configured to accommodate the electrode assembly. In addition, a cross-section of the electrode assembly perpendicular to the mandrel axis may be a circle, and the battery case may have a cylindrical shape.

In the embodiment of the present specification, the secondary battery may be a battery having a ratio of a form factor that is about 0.4 or less (the ratio of the form factor is defined as a value made by dividing a diameter of the cylindrical battery by a height of the cylindrical battery, i.e., a ratio of a diameter Φ to a height H). In this case, the form factor means a value indicating the diameter and the height of the cylindrical secondary battery. For example, 18650 cell, 21700 cell, and the like may be used. In the case of 18650 cell, a diameter thereof is approximately 18 mm, a height thereof is approximately 65 mm, and a ratio of the form factor thereof is approximately 0.277. In the case of 21700 cell, a diameter thereof is approximately 21 mm, a height thereof is approximately 70 mm, and a ratio of the form factor thereof is approximately 0.300.

In the embodiment of the present specification, the secondary battery may be a cylindrical secondary battery having a ratio of the form factor that is larger than 0.4.

The cylindrical secondary battery according to the embodiment of the present specification may be 46110 cell, 48750 cell, 48110 cell, 48800 cell, or 46800 cell. In the numerical value indicating the form factor, the first two numbers indicate a diameter of the cell, the next two numbers indicate a height of the cell, and the final number 0 indicates that a cross-section of the cell is circular.

The secondary battery according to the embodiment of the present specification may be a cylindrical secondary battery that is a cylindrical cell and has a diameter of 46 mm, a height of 110 mm, and a ratio of the form factor of 0.418.

The secondary battery according to the embodiment of the present specification may be a cylindrical secondary battery that is a cylindrical cell and has a diameter of 48 mm, a height of 75 mm, and a ratio of the form factor of 0.640.

The secondary battery according to the embodiment of the present specification may be a cylindrical secondary battery that is a cylindrical cell and has a diameter of 48 mm, a height of 110 mm, and a ratio of the form factor of 0.436.

The secondary battery according to the embodiment of the present specification may be a cylindrical secondary battery that is a cylindrical cell and has a diameter of 48 mm, a height of 80 mm, and a ratio of the form factor of 0.600.

The secondary battery according to the embodiment of the present specification may be a cylindrical secondary battery that is a cylindrical cell and has a diameter of 46 mm, a height of 80 mm, and a ratio of the form factor of 0.575.

Another embodiment of the present specification provides the secondary battery including the electrode assembly 1 and the battery case configured to accommodate the electrode assembly 1.

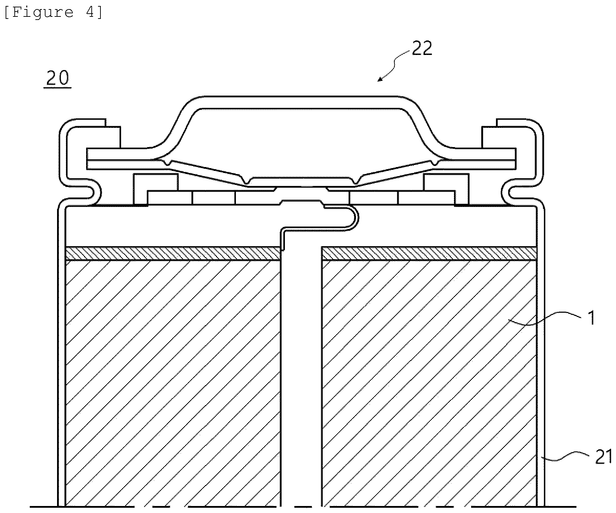

FIG. 4 illustrates a secondary battery 20 in which the wound electrode assembly 1 is accommodated in the battery case. A cross-section of the electrode assembly 1 perpendicular to the mandrel axis may be a circle, and the battery case may have a cylindrical shape. The battery case may include a can 21 and a cap assembly 22.

The can 21 may have a column structure having a space therein. The internal space of the can 21 may accommodate an electrolyte (not illustrated) and the battery assembly 1 including the electrode and the separator. The can 21 may have one side having an opened structure, and the other side having a sealed structure. In this case, one side and the other side of the can 21 may mean ends positioned on the upper and lower portions in the gravitational direction or along the central axis of the can 21.

The can 21 may be made of a lightweight conductive metallic material such as aluminum or aluminum alloy.

The cap assembly 22 may be coupled to an upper portion of the can 21 and include a top cap, a safety vent, and a current blocking element.

The top cap may protrude from an uppermost portion of the cap assembly 22 and serve as an electrode terminal electrically connected to an external component. The safety vent may discharge a high-pressure gas when the gas is generated at a predetermined level or higher because of an increase in internal pressure. The current blocking element may block an electric current when the internal pressure of the battery increases.

The top cap may be coupled to the upper portion of the can 21. That is, the top cap may be coupled to a crimping portion positioned on an uppermost portion of the can 21.

The secondary battery 20 according to the present invention may include a gasket between the crimping portion and the top cap. The gasket may increase sealability of the case.

The top cap may include a protruding portion protruding upward in the gravitational direction, a rim portion coupled to the gasket, and a connection portion configured to connect the protruding portion and the rim portion.

The safety vent may be positioned below the top cap and coupled to an end of the top cap. The safety vent is in contact with an end of the top cap by a predetermined length, and a portion, except for a contact length, may be positioned to be spaced apart from the top cap at a predetermined distance.

The safety vent may be bent one or more times. For example, two notches may be provided on a portion of the safety vent that is not in contact with the top cap. That is, the safety vent may be bent by a notch, and a center of the safety vent may be recessed to define a recessed central portion. Further, the safety vent may have a venting portion that connects the recessed central portion and the end being in contact with the top cap.

The current blocking element may be positioned below the safety vent and be at least partially in contact with the safety vent.

The current blocking element may include a central portion protruding in a direction toward the safety vent, and a CID filter portion positioned outside the central portion. Therefore, a central portion of the current blocking element of the cap assembly 22 may be in contact with the recessed central portion of the safety vent.

The cap assembly 22 according to the present invention may have a CID gasket provided at an end of the CID filter portion. The CID gasket may prevent the safety vent from being in contact with a portion except for the central portion of the current blocking element.

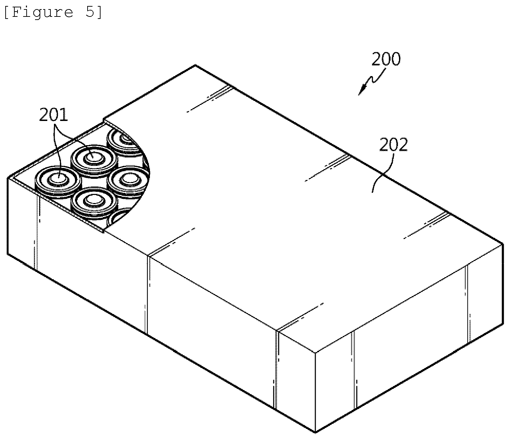

Another embodiment of the present specification provides a battery pack including two or more secondary batteries. FIG. 5 is a view schematically illustrating a configuration of the battery pack according to the embodiment of the present invention.

With reference to FIG. 5, a battery pack 200 according to the embodiment of the present invention includes an assembly to which a secondary battery cell 201 is electrically connected, and a pack housing 202 configured to accommodate the assembly. The cylindrical secondary battery cell 201 is the battery cell according to the above-mentioned embodiment. For convenience of illustration, components such as busbars for electrical connection between the cylindrical battery cells 201, a cooling unit, and an external terminal are omitted from the drawings.

Still another embodiment of the present specification provides a transportation means including the battery pack 200. The transportation means may mean any means that works while moving or moving goods, people, and the like. The transportation means may be a bicycle, heavy equipment, agricultural equipment, vehicle, bus, airplane, or the like.

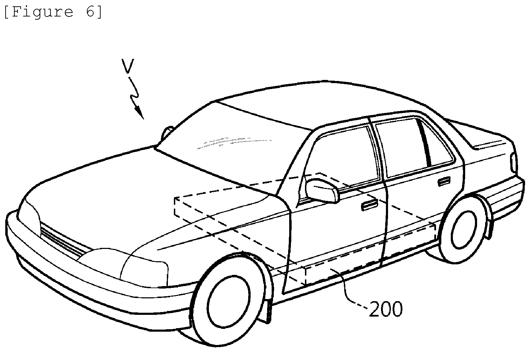

The battery pack 200 may be mounted in a vehicle V. For example, the vehicle may be an electric vehicle, a hybrid vehicle, or a plug-in hybrid vehicle. The vehicle V may be a four-wheel vehicle or a two-wheel vehicle. FIG. 6 is a view for explaining the vehicle V including the battery pack 200 illustrated in FIG. 5.

With reference to FIG. 6, the vehicle V according to the embodiment of the present specification includes the battery pack 200 according to the embodiment of the present specification. The vehicle V operates by receiving electric power from the battery pack 200 according to the embodiment of the present invention.

### [Mode for Invention]

The present invention has been described with reference to the limited exemplary embodiments and the drawings, but the present invention is not limited thereto. The described exemplary embodiments may be changed or modified by those skilled in the art to which the present invention pertains within the technical spirit of the present invention and within the scope equivalent to the appended claims.

### [Examples]

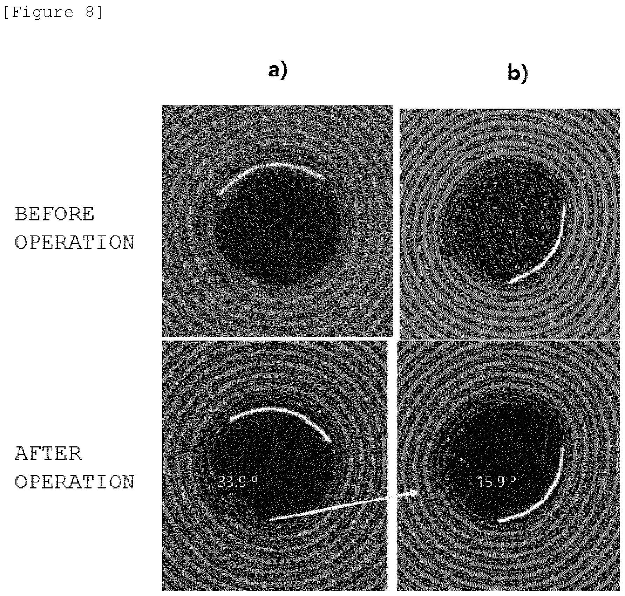

As illustrated in FIG. 2, a jelly-roll (J/R) with a cross-sectional diameter of 20.5 mm was manufactured by stacking a negative electrode, a positive electrode, and two separators and winding an electrode assembly so that the arrangement was as illustrated in FIG. 8B before an operation. In this case, a thickness of the positive electrode current collector is about 0.015 mm, and an overall thickness of the positive electrode coated portions provided on the two opposite surfaces of the positive electrode current collector and having the positive electrode active material layer is about 0.150 mm. In addition, a thickness of the negative electrode current collector is about 0.008 mm, and an overall thickness of the negative electrode coated portions provided on the two opposite surfaces of the negative electrode current collector and having the negative electrode active material layer is about 0.180 mm.

The term "before an operation" in FIG. 8 is a CT image showing an initial arrangement state, the separator is not shown, a relatively thick line is the positive electrode, and the thin line is a negative electrode. In this case, the negative electrode coated portion and the positive electrode coated portion have the equal or similar thicknesses. Because the carbon-based active material of the negative electrode coated portion transmits light, the negative electrode active material layer is not visible in the CT image, and only the negative electrode current collector is visible in the CT image and shown to be relatively thin.

The jelly-roll type assembly was inserted into the can (cross-sectional diameter: 21 mm) having the cylindrical shape. Next, the battery of the example was completely manufactured by injecting a carbonate-based electrolyte into the can and sealing the can.

### [Comparative Example]

As in the example, a jelly-roll (J/R) with a cross-sectional diameter of 20.5 mm was manufactured by stacking a negative electrode, a positive electrode, and two separators and winding an electrode assembly so that the arrangement was as illustrated in FIG. 8A before an operation. Thereafter, as in the embodiment, the battery was completely manufactured by inserting the electrode assembly into the case and injecting the electrolyte.

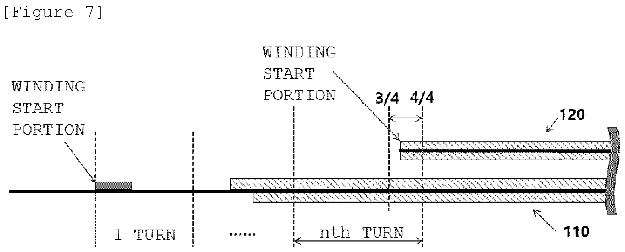

In the jelly-roll, the position of the winding start portion of the positive electrode was adjusted based on the stack of the comparative example to implement the same arrangement as before the operation in FIG. 8B, i.e., the winding start portion of the positive electrode was changed to be closer to the negative electrode tab. In this case, the changed position of the winding start portion of the positive electrode was determined in consideration of the size of the mandrel 10, a target diameter of the wound jelly-roll, and a diameter of the battery case. Specifically, as illustrated in FIG. 7, when a winding length, which accumulates from the winding start portion of the mandrel side negative electrode tab to the winding start portion of the positive electrode is defined by the number of winding times and expressed as the number of turns, the winding start portion of the positive electrode having a nth turn winding length, in which the winding start portion of the positive electrode is included, was disposed at a position corresponding to the nth turn winding length of 3/4 or more and less than 4/4.

### [Experimental Example]

Whether the jelly rolls were deformed was observed after the batteries of the example and comparative example were charged and discharged once under the following condition.

### <Test Condition>

Temperature: 25°C
Charge: 4.25V 1C 50mA cut, rest 10min
Discharge: 1C 2.5V cut, rest 20min
To identify the deformation of the battery after a single charge and discharge, the XSCAN-8225 was used to take CT images at 225 kV and a frame rate of 3 fps, and the results are shown in FIG. 8 as "after operation". Specifically, FIG. 8A is a CT image of the comparative example, and FIG. 8B is a CT image of the example.

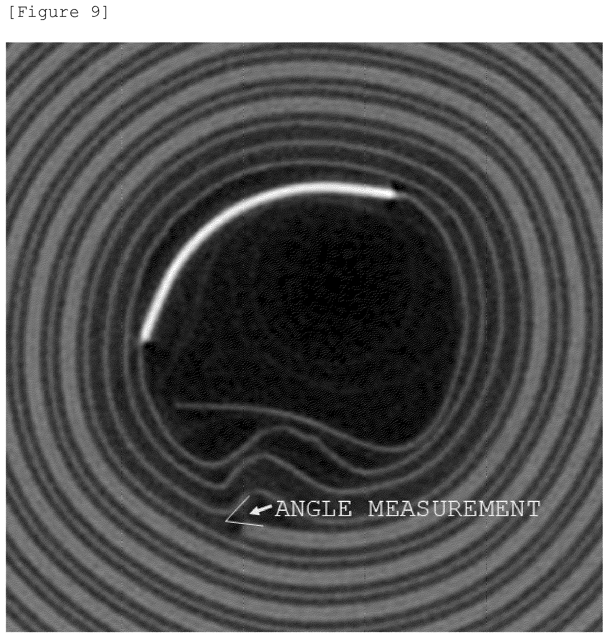

As illustrated in FIG. 9, a deformation degree of the mandrel side negative electrode in the vicinity of the positive electrode winding start portion may be identified from a deformed angle with respect to the reference line, and the measured deformation degrees are shown in Table 1 below.

**[Table 1]**

| | Example | Comparative Example |
|---|---|---|
| Deformation Degree (°) | 15.9 | 33.9 |

With reference to FIG. 8, it can be seen that the mandrel side of the battery of the comparative example is deformed by the expansion of the electrode during the charging or discharging process, but in the example in which the negative electrode tab is disposed rearward of the winding start portion of the positive electrode in the winding direction of the positive electrode, the movement of the mandrel side of the battery is suppressed, such that the deformation, which may cause an internal short circuit, is reduced by 53% ((33.9-15.9) ×100/33.9).

## Claims

1. An electrode assembly, comprising:
a positive electrode;
a negative electrode;
a separator disposed between the positive electrode and the negative electrode, the positive electrode, the separator, and the negative electrode being sequentially stacked and wound,
wherein the negative electrode comprises a negative electrode current collector and a negative electrode active material layer provided on at least one surface of the negative electrode current collector,
wherein the negative electrode comprises a negative electrode non-coated portion provided at one end of a mandrel part side of the negative electrode current collector and having no negative electrode active material layer,
wherein a negative electrode tab is disposed on the negative electrode non-coated portion,
wherein the separator and the negative electrode extend toward a mandrel part side of the electrode assembly so as to be longer and more wound than the positive electrode, and
wherein on an arbitrary circle in which a mandrel of the electrode assembly is a center of the circle and a distance from the center of the circle to the longitudinal end of the positive electrode is a radius, a central angle of a minor arc formed to the longitudinal end of the positive electrode from a contact point at which a line extending from a winding start portion of the negative electrode tab to an arbitrary point on a circumference of the arbitrary circle is orthogonal to a tangent line to the arbitrary circle is more than 0° and 90° or less.

2. The electrode assembly of claim 1, wherein the positive electrode comprises a positive electrode current collector and a positive electrode active material layer disposed on at least one surface of the positive electrode current collector,
wherein the positive electrode comprises a positive electrode non-coated portion having no positive electrode active material layer,
wherein a positive electrode tab is disposed on the positive electrode non-coated portion, and
wherein on the arbitrary circle, a central angle of an arc formed to the longitudinal end of the positive electrode from a contact point at which a line extending from a winding start portion of the positive electrode tab to an arbitrary point on a circumference of the arbitrary circle is orthogonal to a tangent line to the arbitrary circle is more than 90° and 180° or less.

3. The electrode assembly of claim 2, wherein the positive electrode non-coated portion is positioned between two positive electrode coated portions of the positive electrode active material layer.

4. The electrode assembly of claim 1, wherein the negative electrode further comprises an additional negative electrode non-coated portion disposed at one end of an outer peripheral side of the negative electrode current collector and having no negative electrode active material layer, and
wherein an additional negative electrode tab is provided on the additional negative electrode non-coated portion.

5. The electrode assembly of claim 1, wherein the positive electrode comprises a positive electrode current collector and positive electrode active material layers provided on two opposite surfaces of the positive electrode current collector, and winding start portions of the positive electrode active material layers disposed on the two opposite surfaces of the positive electrode current collector are aligned with each other.

6. The electrode assembly of claim 3, wherein the positive electrode comprises positive electrode active material layers provided on two opposite surfaces of the positive electrode current collector, and winding end portions of the positive electrode active material layers disposed on the two opposite surfaces of the positive electrode current collector are aligned with each other.

7. The electrode assembly of claim 1, wherein a length of the negative electrode tab in a winding direction is 2 mm or more and 5 mm or less.

8. The electrode assembly of claim 1, wherein the separators comprises a first separator and a second separator, wherein the negative electrode, the first separator, the positive electrode, and the second separator are sequentially stacked and wound.

9. The electrode assembly of claim 8, wherein the electrode assembly is wound so that the negative electrode is disposed on an outermost periphery thereof.

10. A secondary battery comprising:
the electrode assembly according to any one of claims 1 to 9; and
a battery case accommodating the electrode assembly therein.

11. The secondary battery of claim 10, wherein a cross-section of the electrode assembly perpendicular to a mandrel axis is a circle, and the battery case has a cylindrical shape.

12. A battery pack comprising two or more secondary batteries according to claim 10.

13. A transportation means comprising the battery pack according to claim 12.
